# EUROPEAN PATENT SPECIFICATION

(11) **EP 1 558 049 B1**
(45) Date of publication and mention of the grant of the patent: **10.10.2007**
(21) Application number: 05000485.2
(22) Date of filing: 12.01.2005
(51) Int. Cl.: H04Q 7/38

(54) **Mobile communication system, mobile communication terminal and mobile communication method for determing positions without receiving a communication service**
Mobilkommunikationssystem, Mobilendgerät und Mobilkommunikationsverfahren zum Bestimmen von Positionen ohne Empfang eines Kommunikationsdienstes
Système de communication mobile, terminal de communication mobile et procédé de communication mobile pour déterminer les positions sans recevoir de service de communication

(30) Priority: 21.01.2004 JP 2004012544
(43) Date of publication of application: 27.07.2005
(73) Proprietor: NEC CORPORATION, Tokyo (JP)
(72) Inventor: Kaneko, Takahiro c/o NEC Corporation, Tokyo (JP)
(74) Representative: Vossius & Partner

(56) References cited:
- EP-A- 1 021 055
- GB-A- 2 344 026
- US-A1- 2004 203 855
- US-B1- 6 266 514
- US-B1- 6 442 393

## Description

The present invention relates to a mobile communication system, a mobile communication terminal and a mobile communication method, in particular, to a technology in which the mobile communication terminal determines an area where service is available.

In a mobile communication system, there resides an area where a mobile communication terminal cannot ensure a satisfactory reception electric field level for carrying out communication, that is, an area where a user of the mobile communication terminal cannot enjoy service (that is, an out of service area). When the mobile communication terminal is positioned in such an area, the mobile communication terminal displays information indicating the fact that the service is not available in the area.

For example, JP-A-2002-186045, JP-A-2003-161622 and JP-A-2003-284137 disclose technologies which are utilized when a mobile communication terminal cannot obtain a satisfactory reception electric field level.

It is necessary for a service provider that provides mobile wireless communication service to determine the area where users of mobile communication terminals cannot receive the service. As well known methods to determine such an area, a method, which utilizes a simulation, and a method, in which an actual reception electric field level is measured in the concerned area, are available. However, it is difficult to determine the area in detail with the simulation. Also, a considerable man-hour is required to actually measure the reception electric field level.

EP-A-1021055 discloses a method for acquiring the characteristics, ie. the measured received electric field level, of a mobile radio network wherein the characteristic data and the position data of a subscriber are evaluated and edited, and wherein the data are transmitted to a data logging center where processing and management of the transmitted data are effected.

US-B-6442393 describes a method and system for automatically mapping areas of poor network coverage or high interference in a cellular network using signal quality measures and mobile station location information.

A mobile communication system according to the present invention is defined in claim 1 and provides a radio base station, a mobile communication terminal and a radio control station. The radio base station communicates with a mobile communication terminal within a service area thereof. When the communication with the radio base station is in bad condition, the mobile communication terminal measures and stores a present position. The radio control station receives the present position from the mobile communication terminal.

The mobile communication terminal of the present invention is defined in claim 7 and comprises a measuring device for measuring the present position and a memory for storing the measured position. When the communication with the radio base station is in bad condition, the mobile communication terminal measures the present position.

A mobile communication method of the present invention is defined in claim 12. The mobile communication method provides, when the mobile communication terminal cannot carry out the communication with the radio base station, a step for measuring a present position of the mobile communication terminal, a step for storing the measured present position in the mobile communication terminal and a step for transmitting the present position from the mobile communication terminal to the radio control station via the radio base station. In the above-described invention, the mobile communication terminal can transmit the information of the present position in response to a request from the radio control station.

A computer program according to the present invention is a program as defined in claim 17 by which the mobile communication terminal transmits a present position of its own terminal to the radio control station, which makes the computer within the mobile communication terminal execute the following processing. That is, when a received signal from the radio base station is equal to a predetermined level or less, a processing for measuring a present position of the mobile communication terminal, and a processing for storing the present position in the mobile communication terminal are executed, and when the received signal from the radio base station is larger than the predetermined level, a processing for transmitting the position to the radio control station via the radio base station.

Owing to the above-described invention, it is possible for a service provider of the mobile communication system to readily determine such an area wherein a mobile communication terminal cannot carry out communication, that is, an area where communication service cannot be provided.

The above and other objects, features and advantages of the present invention will become apparent from the following detailed description when taken with the accompanying drawings in which:
FIG. 1 is a block diagram of a mobile communication terminal according to an embodiment of the present invention;
FIG. 2 is a block diagram of a mobile communication system according to the embodiment of the present invention;
FIG. 3 shows an example of operation of the mobile communication terminal; and
FIG. 4 shows another example of operation of the mobile communication terminal.

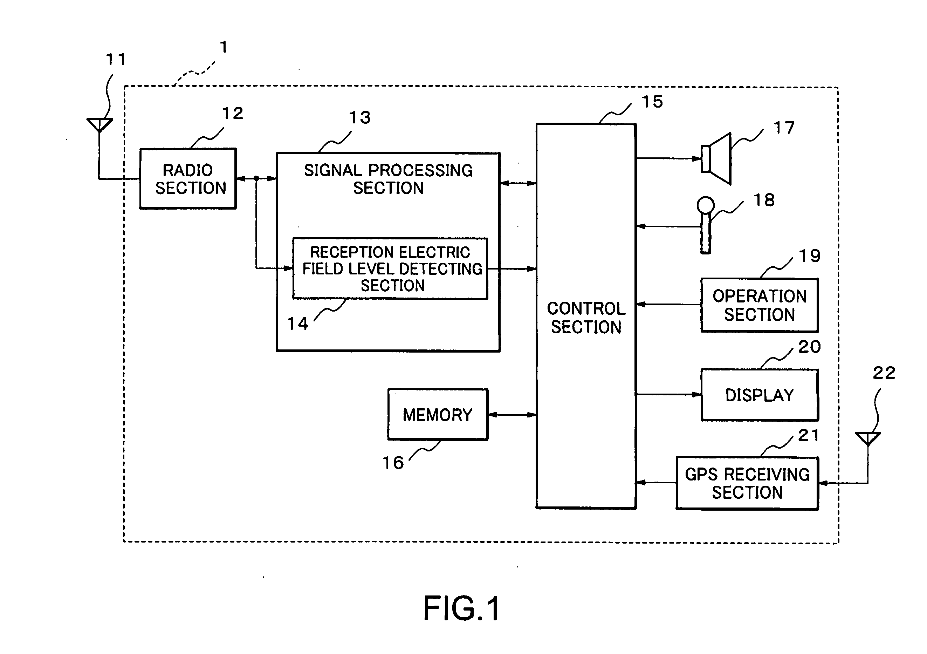

A preferred embodiment of the present invention will be described below. Referring to FIG. 1, a mobile communication terminal 1 of the embodiment is, for example, a cellular telephone. The mobile communication terminal 1 includes an antenna 11, a radio section 12, a signal processing section 13, a reception electric field level detecting section 14, a control section 15, a memory 16, a speaker 17, a microphone 18, an operation section 19, a display 20, a Global Positioning System (GPS) receiving section 21 and a GPS antenna 22. The signal processing section 13 performs modulation/demodulation processing of digital signals on the data to be transmitted to a radio base station and received from the radio base station. The reception electric field level detecting section 14 is disposed in the signal processing section 13. The reception electric field level detecting section 14 detects a reception electric field level of radio signals transmitted from the radio base station, and notifies the detected result to the control section 15. The operation section 19 is a key input section and provides operation keys (not shown) such as a power ON/OFF key, keys for inputting a telephone number, a call start/termination key and input keys for data communication. The display 20 displays an indication of an out of service area/a service area, a reception electric field level, date, time, an operating message, a status of battery and the like. When the electric field level of the received signals detected by the reception electric field level detecting section 14 is equal to a predetermined threshold or less, the GPS receiving section 21 receives GPS signals via the GPS antenna 22, and synchronizes the received GPS signals, and demodulates the data, and calculates a present position of the terminal 1. It is possible to adapt the control section 15 to calculate the present position. The memory 16 stores the calculated present position as positional information, and is further capable of storing a program, data and the like, which are executed by the control section 15.

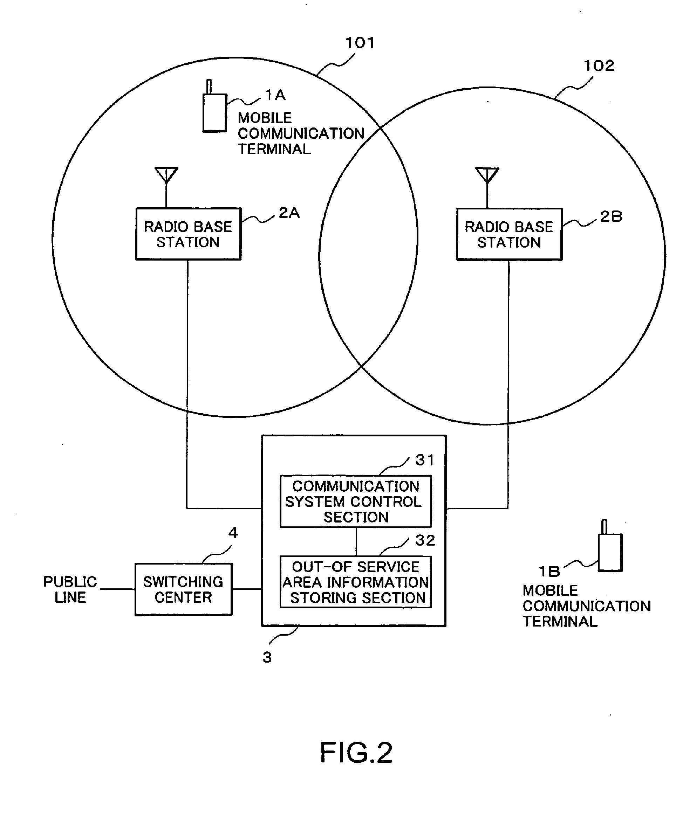

FIG. 2 shows an embodiment of a mobile communication system. FIG. 2 shows radio base stations 2A and 2B, mobile communication terminals 1A and 1B, a radio control station 3 and a switching center 4. The radio base station 2A has a mobile communication service area 101, and the radio base station 2B has a mobile communication service area 102. The radio control station 3 provides a communication system control section 31 and an out of service area information storing section 32. The communication system control section 31 controls the communication in a plurality of service areas. The out of service area information storing section 32 stores the information about the position at which the mobile communication terminal was positioned when the communication with the radio base station was unavailable. The radio control station 3 is connected to a public line via the switching center 4. When the mobile communication terminals 1A and 1B are positioned within the service area 101 or 102, the terminals 1A and 1B can carry out communication with the radio base station 2A or 2B. In FIG. 2, the mobile communication terminal 1A is positioned in the service area 101, and is accordingly possible to carry out the communication with the radio base station 2A. Since the mobile communication terminal 1B is positioned in neither the service area 101 nor 102, the mobile communication terminal 1B is impossible to carry out communication with neither the radio base station 2A nor 2B. The mobile communication terminal 1B measures the position at which the terminal 1B itself is positioned, and stores the information. The radio control station 3 determines the area where the mobile communication service cannot be provided, by collecting such positions or positional information.

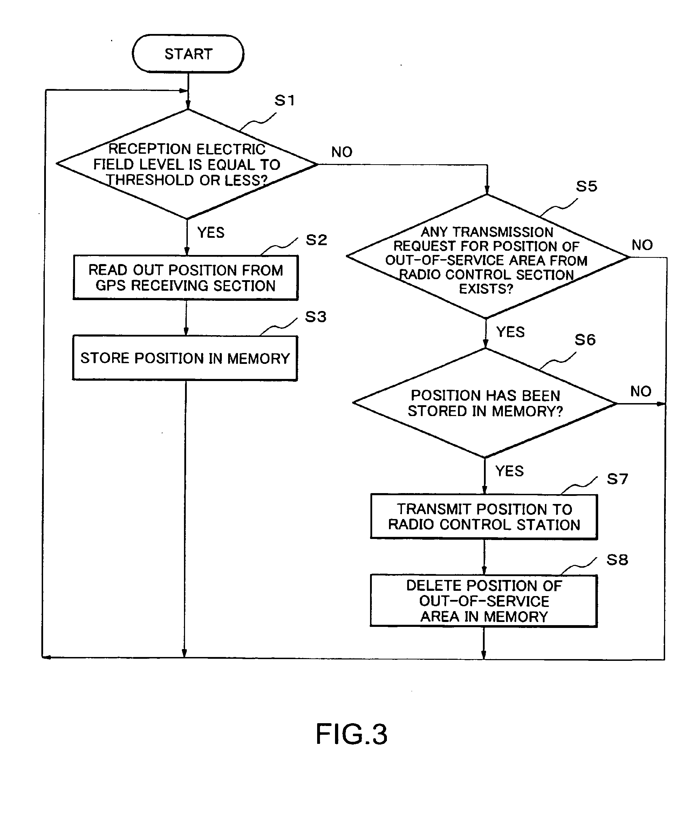

Referring to FIG. 3, the operation of the mobile communication terminal 1 is carried out, when the control section 15 executes the program in the memory 16. The reception electric field level detecting section 14 in the mobile communication terminal 1 receives radio signals from the radio base station, and detects the electric field level thereof, and notifies the detected result to the control section 15. The control section 15 compares the reception electric field level with a predetermined threshold (S1). When the reception electric field level is equal to the threshold or less (YES at S1), the control section 15 reads out the present position of the terminal 1 obtained by the GPS receiving section 21 (S2), and stores the present position '
(that is, positional information) in the memory 16 (S3). At this time, the control section 15 can compare the positional information read out at the S2 with the positional information being stored in the memory 16. When these compared positional information is the same (a range to be determined as the same is settable beforehand), the read out positional information may be discarded, or may be overwritten on the same positional information in the memory. When the reception electric field level is larger than the threshold (NO at S1), the control section 15 judges whether any transmission request for positional information from the radio control station 3 exists or not (S5) . When a transmission request for positional information from the radio control station 3 exists (YES at S5), the control section 15 judges whether the positional information has been stored in the memory 16 or not (S6). When no transmission request exists (NO at S5), the operation at the step S1 is carried out. When the positional information has been stored in the memory 16 (YES at S6), the control section 15 transmits the positional information to the radio base station (S7). The positional information is transmitted to the radio control station 3 via the radio base station and is stored in the out of service area information storing section 32. When the positional information is transmitted to the radio control station 3, the control section 15 deletes the positional information being stored in the memory 16 (S8) . When the memory 16 does not store the positional information (NO at S6), the operation at S1 starts. When the operation at S3 or S8 has completed, the operation starts from S1.

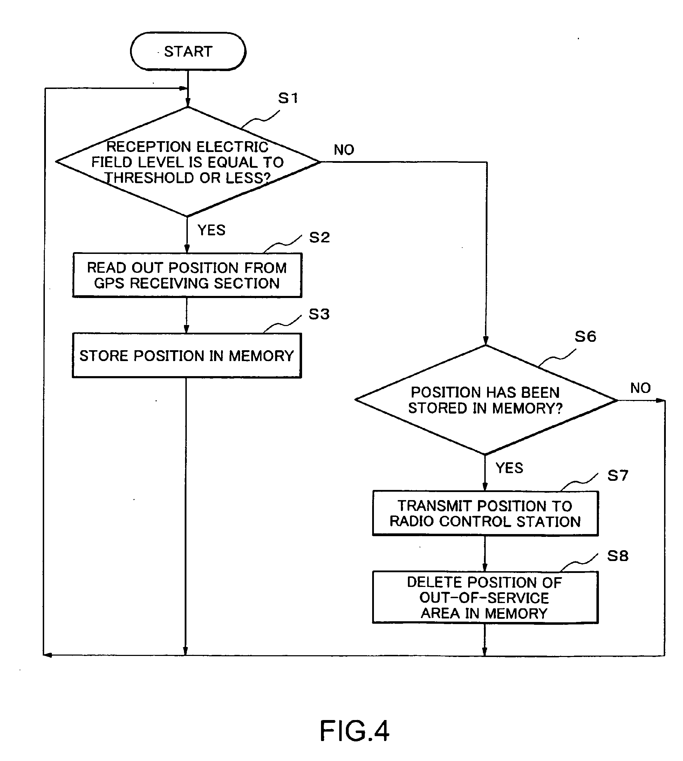

Referring to FIG. 4, another embodiment of the mobile communication terminal is shown. This example is basically the same as the example shown in FIG. 3. However, when it is judged that the reception electric field level is larger than the threshold (NO at S1), the mobile communication terminal 1 immediately judges whether the positional information has been stored in the memory 16 or not (S6). The radio control station 3 can obtain the positional information without transmitting any positional information transmission request.

In many cases, the mobile communication terminal 1 ordinarily measures the reception electric field level at a cycle of approximately 1 to 5 seconds. Also, in the case where a period while the mobile communication terminal 1 is positioned out of the service area becomes longer, the above-described cycle becomes much longer. Every time when the reception electric field level is measured, the mobile communication terminal 1 can carry out the above-described operation of S2 and S5 (in the case of FIG. 3), or the operation of S6 (in the case of FIG. 4) . On the other hand, the mobile communication terminal 1 can carry out the above operation every time when the reception electric field level is measured by predetermined times.

According to the present invention, it is possible for a service provider of the mobile communication system to easily determine and update the area, where the communication service is unavailable, based on the received positional information.

While the present invention has been described in connection with certain preferred embodiments, it is to be understood that the subject matter encompassed by the present invention is not limited to those specific embodiments. On the contrary, it is intended to include all alternatives, modifications, equivalents as can be included within the scope of the following claims.

## Claims

1. A mobile communication system, comprising:
a radio base station (2A, 2B) for communicating with a mobile communication terminal in a service area (101, 102);
a mobile communication terminal (1A, 1B) that is adapted to, in the case where a reception electric field level in the communication with the radio base station is judged to be equal to a predetermined threshold or less, measure and store a present position, and to transmit the present position, when communication with the radio base station (2A, 2B) is possible (a) in response to a request from a radio control station (3), or (b) immediately when it is judged that the reception electric field level is larger than the threshold; and
the radio control station (3) for receiving the present position from the mobile communication terminal (1A, 1B),
wherein the present position stored in the mobile communication terminal (1A, 1B) is deleted after being transmitted to the radio control station (3).

2. The mobile communication system according to claim 1, wherein the radio control station (3) is adapted to communicate with the mobile communication terminal (1A, 1B) via the radio base station (2A, 2B).

3. The mobile communication system according to claim 1 or 2, wherein the mobile communication terminal (1A, 1B) is further adapted to transmit the present position every time when the reception electric field level is measured by predetermined times.

4. The system according to claim 1, 2, or 3, wherein the radio control station (3) is adapted to store the present position as a position out of the service area (101, 102).

5. The system according to claim 1, 2, 3, or 4, wherein the mobile communication terminal (1A, 1B) is adapted to measure the present position based on Global Positioning System.

6. The system according to any one of claims 1 to 5, wherein, in the case where the measured present position is the same as a position stored in the mobile communication terminal, the mobile communication terminal (1A, 1B) is adapted to discard the measured present position.

7. A mobile communication terminal (1), comprising:
a measuring device (21) for measuring a present position; and
a memory (16) for storing the measured present position,
wherein,
the mobile communication terminal (1) is adapted to measure and store the present position, in the case where a reception electric field level in the communication with a radio base station (2A, 2B) is judged to be equal to a predetermined threshold or less and to transmit the present position, when communication with the radio base station (2A, 2B) is possible (a) in response to a request from a radio control station (3), or (b) immediately when it is judged that the reception electric field level is larger than the threshold;
wherein the present position in the memory (16) is deleted after being transmitted to the radio control station (3).

8. The mobile communication terminal according to claim 7, further adapted to transmit
the stored present position to the radio control station (3) via the radio base station (2A, 2B).

9. The mobile communication terminal according to claim 7 or 8, further adapted to transmit the present position every time when the reception electric field level is measured by predetermined times.

10. The mobile communication terminal according to claim 1, 8, or 9, wherein
the measuring device (21) is adapted to measure the present position of the mobile communication terminal (1) by means of Global Positioning System.

11. The mobile communication terminal according to claim 7, 8, 9 or 10, further adapted to discard the measured present position
in the case where the measured present position is the same as a position stored in the memory (16).

12. A mobile communication method, comprising the steps of:
measuring a present position of a mobile communication terminal (1A, 1B) when the mobile communication terminal (1A, 1B) judges a reception field level in a communication with a radio base station (2A, 2B) to be equal to a predetermined threshold or less,
storing the measured present position in the mobile communication terminal (1A, 1B),
transmitting the present position to a radio control station (3) from the mobile communication terminal (1A, 1B) via the radio base station (2A, 2B),
(a) in response to a request from the radio control station (3) or
(b) immediately when it is judged that the reception field level is larger than the threshold, and deleting the present position in the mobile communication terminal (1A, 1B) after the present position is transmitted to the radio control station (3).

13. The mobile communication method according to claim 12,
wherein
the mobile communication terminal transmits the present position every time when the reception electric field level is measured by predetermined times.

14. The method according to claim 12 or 13,
wherein
the mobile communication terminal (1A, 1B) measures the present position thereof by means of Global Positioning System.

15. The method according to claim 12, 13, or 14, further comprising the step of:
storing the present position as a position out of a service area (101, 102) in the radio control station (3).

16. The mobile communication method according to claim 12, 13, 14 or 15, wherein
in the case where the measured present position is the same as a position stored in the mobile communication terminal (1A, 1B) the measured position is discarded.

17. A program by which a mobile communication terminal transmits a position of its own terminal to a radio control station, wherein the program makes a computer in the mobile communication terminal execute the method according to claim 12.

## Patentansprüche

1. Mobilkommunikationssystem mit:
einer Funkbasisstation (2A, 2B) zum Kommunizieren mit einem Mobilkommunikationsendgerät innerhalb eines Dienstgebietes (101, 102);
einem Mobilkommunikationsendgerät (1A, 1B), das dazu geeignet ist, eine Ist-Position zu messen und zu speichern, wenn entschieden wird, dass ein elektrischer Empfangsfeldstärkepegel in der Kommunikation mit der Funkbasisstation kleiner oder gleich einem vorgegebenen Schwellenwert ist, und die Ist-Position zu übertragen, wenn die Kommunikation mit der Funkbasisstation (2A, 2B) möglich ist,
a) in Antwort auf eine Anforderung von einer Funksteuerstation (3); oder
b) unmittelbar, wenn entschieden wird, dass der elektrische Empfangsfeldstärkepegel größer ist als der Schwellenwert; und
die Funksteuerstation (3) zum Empfangen der Ist-Position vom Mobilkommunikationsendgerät (1A, 1B);
wobei die im Mobilkommunikationsendgerät (1A, 1B) gespeicherte Ist-Position, nachdem sie zur Steuerstation (3) übertragen wurde, gelöscht wird.

2. System nach Anspruch 1, wobei die Funksteuerstation (3) dazu geeignet ist, über die Funkbasisstation (2A, 2B) mit dem Mobilkommunikationsendgerät (1A, 1B) zu kommunizieren.

3. System nach Anspruch 1 oder 2, wobei das Mobilkommunikationsendgerät (1A, 1B) ferner dazu geeignet ist, die Ist-Position immer dann zu übertragen, wenn eine vorgegebene Anzahl von Messungen des elektrischen Empfangsfeldstärkepegels ausgeführt ist.

4. System nach Anspruch 1, 2 oder 3, wobei die Funksteuerstation (3) dazu geeignet ist, die Ist-Position als eine außerhalb des Dienstgebiets (101, 102) angeordnete Position zu speichern.

5. System nach Anspruch 1, 2, 3 oder 4, wobei das Mobilkommunikationsendgerät (1A, 1B) dazu geeignet ist, die Ist-Position basierend auf GPS (Global Positioning System) zu messen.

6. System nach einem der Ansprüche 1 bis 5, wobei, wenn die gemessene Ist-Position der im Mobilkommunikationsendgerät gespeicherten Position gleicht, das Mobilkommunikationsendgerät (1A, 1B) dazu geeignet ist, die gemessene Ist-Position zu verwerfen.

7. Mobilkommunikationsendgerät (1) mit:
einer Messeinrichtung (21) zum Messen einer Ist-Position; und
einem Speicher (16) zum Speichern der gemessenen Ist-Position;
wobei das Mobilkommunikationsendgerät (1) dazu geeignet ist, die Ist-Position zu messen und zu speichern, wenn entschieden wird, dass ein elektrischer Empfangsfeldstärkepegel in der Kommunikation mit einer Funkbasisstation (2A, 2B) kleiner oder gleich einem vorgegebenen Schwellenwert ist, und die Ist-Position zu übertragen, wenn die Kommunikation mit der Funkbasisstation (2A, 2B) möglich ist,
a) in Antwort auf eine Anforderung von einer Funksteuerstation (3); oder
b) unmittelbar, wenn entschieden wird, dass der elektrische Empfangsfeldstärkepegel größer ist als der Schwellenwert;
wobei die im Speicher (16) gespeicherte Ist-Position, nachdem sie zur Funksteuerstation (3) übertragen wurde, gelöscht wird.

8. Mobilkommunikationsendgerät nach Anspruch 7, wobei das Mobilkommunikationsendgerät ferner dazu geeignet ist, die gespeicherte Ist-Position über die Funkbasisstation (2A, 2B) an die Funksteuerstation (3) zu übertragen.

9. Mobilkommunikationsendgerät nach Anspruch 7 oder 8, wobei das Mobilkommunikationsendgerät ferner dazu geeignet ist, die Ist-Position immer dann zu übertragen, wenn eine vorgegebene Anzahl von Messungen des elektrischen Empfangsfeldstärkepegel ausgeführt ist.

10. Mobilkommunikationsendgerät nach Anspruch 7, 8 oder 9, wobei die Messeinrichtung (21) ferner dazu geeignet ist, die Ist-Position des Mobilkommunikationsendgeräts (1) durch ein GPS (Global Positioning System) zu messen.

11. Mobilkommunikationsendgerät nach Anspruch 7, 8, 9 oder 10, wobei das Mobilkommunikationsendgerät ferner dazu geeignet ist, die gemessene Ist-Position zu ververfen, wenn die gemessene Ist-Position einer im Speicher (16) gespeicherten Position gleicht.

12. Mobilkommunikationsverfahren mit den Schritten:
Messen einer Ist-Position eines Mobilkommunikationsendgeräts (1A, 1B), wenn das Mobilkommunikationsendgerät (1A, 1B) entscheidet, dass ein Empfangsfeldstärkepegel in einer Kommunikation mit einer Funkbasisstation (2A, 2B) kleiner oder gleich einem vorgegebenen Schwellenwert ist;
Speichern der gemessenen Ist-Position im Mobilkommunikationsendgerät (1A, 1B);
Übertragen der Ist-Position vom Mobilkommunikationsendgerät (1A, 1B) über die Funkbasisstation (2A, 2B) an eine Funksteuerstation (3)
(a) in Antwort auf eine Anforderung von der Funksteuerstation (3); oder
(b) unmittelbar nachdem entschieden wurde, dass der Empfangsfeldstärkepegel größer ist als der Schwellenwert; und
Löschen der Ist-Position im Mobilkommunikationsendgerät (1A, 1B), nachdem die Ist-Position zur Funksteuerstation (3) übertragen wurde.

13. Verfahren nach Anspruch 12, wobei das Mobilkommunikationsendgerät die Ist-Position jedesmal überträgt, wenn eine vorgegebene Anzahl von Messungen des elektrischen Empfangsfeldstärkepegels ausgeführt ist.

14. Verfahren nach Anspruch 12 oder 13, wobei das Mobilkommunikationsendgerät (1A, 1B) seine Ist-Position durch ein GPS (Global Positioning System) misst.

15. Verfahren nach Anspruch 12, 13 oder 14, ferner mit dem Schritt zum Speichern der Ist-Position als Position außerhalb eines Dienstgebiets (101, 102) in der Funksteuerstation (3).

16. Verfahren nach Anspruch 12, 13, 14 oder 15, wobei, wenn die gemessene Ist-Position einer im Mobilkommunikationsendgerät (1A, 1B) gespeicherten Position gleicht, die gemessene Position verworfen wird.

17. Programm, durch das einem Mobilkommunikationsendgerät ermöglicht wird, seine Position an eine Steuerstation zu übertragen, wobei das Programm einen Computer im Mobilkommunikationsendgerät veranlasst, das Verfahren nach Anspruch 12 auszuführen.

## Revendications

1. Système de communication mobile, comprenant :
une station de base radio (2A, 2B) pour communiquer avec un terminal de communication mobile dans une zone de service (101, 102) ;
un terminal de communication mobile (1A, 1B) qui est adapté pour, dans le cas où un niveau de champ électrique de réception dans la communication avec la station de base radio est jugé comme étant inférieur ou égal à un seuil prédéterminé, mesurer et stocker une position actuelle, et pour transmettre la position actuelle, lorsque la communication avec la station de base radio (2A, 2B) est possible
(a) en réponse à une requête d'une station de commande radio (3) ou
(b) immédiatement lorsqu'il est jugé que le niveau de champ électrique de réception est supérieur au seuil ; et
la station de commande radio (3) pour recevoir la position actuelle du terminal de communication mobile (1A, 1B),
dans lequel la position actuelle stockée dans le terminal de communication mobile (1A, 1B) est supprimée après avoir été transmise à la station de commande radio (3).

2. Système de communication mobile selon la revendication 1, dans lequel la station de commande radio (3) est adaptée pour communiquer avec le terminal de communication mobile (1A, 1B) par l'intermédiaire de la station de base radio (2A, 2B).

3. Système de communication mobile selon la revendication 1 ou 2, dans lequel le terminal de communication mobile (1A, 1B) est en outre adapté pour transmettre la position actuelle chaque fois que le niveau de champ électrique de réception est mesuré à des moments prédéterminés.

4. Système selon la revendication 1, 2 ou 3, dans lequel la station de commande radio (3) est adaptée pour stocker la position actuelle en tant que position hors de la zone de service (101, 102).

5. Système selon la revendication 1, 2, 3 ou 4, dans lequel le terminal de communication mobile (1A, 1B) est adapté pour mesurer la position actuelle sur la base du système de positionnement mondial (GPS).

6. Système selon l'une quelconque des revendications 1 à 5, dans lequel, dans le cas où la position actuelle mesurée est la même qu'une position stockée dans le terminal de communication mobile, le terminal de communication mobile (1A, 1B) est adapté pour éliminer la position actuelle mesurée.

7. Terminal de communication mobile (1), comprenant :
un dispositif de mesure (21) pour mesurer une position actuelle ; et
une mémoire (16) pour stocker la position actuelle mesurée,
dans lequel,
le terminal de communication mobile (1) est adapté pour mesurer et stocker la position actuelle, dans le cas où un niveau de champ électrique de réception dans la communication avec une station de base radio (2A, 2B) est jugé comme étant inférieur ou égal à un seuil prédéterminé et pour transmettre la position actuelle, lorsque la communication avec la station de base radio (2A, 2B) est possible
(a) en réponse à une requête d'une station de commande radio (3) ou
(b) immédiatement lorsqu'il est jugé que le niveau de champ électrique de réception est supérieur au seuil ;
dans lequel
la position actuelle dans la mémoire (16) est supprimée après avoir été transmise à la station de commande radio (3).

8. Terminal de communication mobile selon la revendication 7, en outre adapté pour transmettre la position actuelle stockée à la station de commande radio (3) par l'intermédiaire de la station de base radio (2A, 2B).

9. Terminal de communication mobile selon la revendication 7 ou 8, en outre adapté pour transmettre la position actuelle chaque fois que le niveau de champ électrique de réception est mesuré à des moments prédéterminés.

10. Terminal de communication mobile selon la revendication 7, 8 ou 9, dans lequel
le dispositif de mesure (21) est adapté pour mesurer la position actuelle du terminal de communication mobile (1) au moyen du système de positionnement mondial (GPS).

11. Terminal de communication mobile selon la revendication 7, 8, 9 ou 10, en outre adapté pour éliminer la position actuelle mesurée dans le cas où la position actuelle mesurée est la même qu'une position stockée dans la mémoire (16).

12. Procédé de communication mobile, comprenant les étapes consistant à :
mesurer une position actuelle d'un terminal de communication mobile (1A, 1B) lorsque le terminal de communication mobile (1A, 1B) juge qu'un niveau de champ de réception dans une communication avec une station de base radio (2A, 2B) est inférieur ou égal à un seuil prédéterminé,
stocker la position actuelle mesurée dans le terminal de communication mobile (1A, 1B),
transmettre la position actuelle à une station de commande radio (3) à partir du terminal de communication mobile (1A, 1B) par l'intermédiaire de la station de base radio (2A, 2B),
(a) en réponse à une requête de la station de commande radio (3), ou
(b) immédiatement lorsqu'il est jugé que le niveau de champ de réception est supérieur au seuil, et
supprimer la position actuelle dans le terminal de communication mobile (1A, 1B) après que la position actuelle a été transmise à la station de commande radio (3).

13. Procédé de communication mobile selon la revendication 12, dans lequel
le terminal de communication mobile transmet la position actuelle chaque fois que le niveau de champ électrique de réception est mesuré à des moments prédéterminés.

14. Procédé selon la revendication 12 ou 13,
dans lequel
le terminal de communication mobile (1A, 1B) mesure la position actuelle de celui-ci au moyen du système de positionnement mondial (GPS).

15. Procédé selon la revendication 12, 13, ou 14, comprenant en outre l'étape consistant à :
stocker la position actuelle en tant que position hors d'une zone de service (101, 102) dans la station de commande radio (3).

16. Procédé de communication mobile selon la revendication 12, 13, 14 ou 15, dans lequel
dans le cas où la position actuelle mesurée est la même qu'une position stockée dans le terminal de communication mobile (1A, 1B), la position mesurée est éliminée.

17. Programme par lequel un terminal de communication mobile transmet une position de son propre terminal à une station de commande radio, dans lequel le programme amène un ordinateur dans le terminal de communication mobile à exécuter le procédé selon la revendication 12.
